# EUROPÄISCHE PATENTSCHRIFT

(11) **EP 3 970 582 B1**
(45) Veröffentlichungstag und Bekanntmachung des Hinweises auf die Patenterteilung: **24.05.2023**
(21) Anmeldenummer: 21020001.0
(22) Anmeldetag: 01.01.2021
(51) Int. Cl.: A47J 45/02, A47J 47/16

(54) **KÜCHENHILFSMITTEL**
CULINARY AID
USTENSILE DE CUISINE

(30) Priorität: 22.09.2020 CH 12012020
(43) Veröffentlichungstag der Anmeldung: 23.03.2022
(73) Patentinhaber: Furlenmeier, Eduard, 8047 Zürich (CH); Jungreithmeier, Ingrid, 8047 Zürich (CH)
(72) Erfinder: Furlenmeier, Eduard, 8047 Zürich (CH); Jungreithmeier, Ingrid, 8047 Zürich (CH)
(74) Vertreter: Körner, Thomas Ottmar

(56) Entgegenhaltungen:
- DE-U1- 8 814 004
- US-A- 2 965 345
- Anonymous: "Zhengdu Flexibler Arm/Schwanenhals, 360 Grad drehbar, verstellbare Halterung mit Saugnapf für alle tragbaren Geräte, universell einsetzbar: Amazon.de: Elektronik", , 1. November 2016 (2016-11-01), Seiten 1-5, XP055816865, Gefunden im Internet: URL:https://www.amazon.de/Flexibler-Schwan enhals-verstellbare-universell-einsetzbar/ dp/B01M4KLTNZ/ref=sr_1_17_sspa?__mk_de_DE= ÅMÅZÕÑ&crid=1M6DMWPH3ZBZG&dchild=1&keyword s=schwanenhals+saugnapf&qid=1624387915&spr efix=schwanenhals+saugna,automotive,161&sr =8-17-spons&psc=1&spLa=ZW5jcnlwdGVkUXVhbGl maWVyPUEyT [gefunden am 2021-06-22]

## Beschreibung

Die Erfindung bezieht sich auf das Gebiet der Küchenausrüstungen. Sie betrifft ein Küchenhilfsmittel gemäss dem unabhängigen Patentanspruch.

Viele Küchenarbeiten und -handgriffe können von einer einzelnen Person nur mit Mühe ausgeführt werden, insbesondere wenn diese vorübergehenden oder dauerhaften körperlichen Einschränkungen unterworfen ist. Dies gilt insbesondere für Arbeiten, die es erforderlich machen, dass ein Küchenutensil in einer vorgegebenen Position gehalten wird, beispielsweise eine Passiermühle, eine Gemüsemühle, ein Passiergerät, ein Passe-vite oder Passetout, ein Passoire, eine "Flotte Lotte^{™}", ein Sieb oder Ähnliches. Soweit die Arbeiten oder -handgriffe dennoch durch eine einzelne Person vorgenommen werden sollen oder müssen, ist Improvisationstalent erforderlich, insbesondere wenn das Küchenutensil bei Gebrauch nicht auf einer Oberfläche wie insbesondere einer Herdplatte abgestellt werden kann, sondern insbesondere - quasi schwebend - über einem Gefäss oder Behälter wie insbesondere einer Pfanne oder einem Topf gehalten werden muss. Dies führt jedoch nicht selten zu Missgeschicken, welche zusätzlichen Aufwand, Verlust an Material und/oder Zutaten, Frustration und Ähnliches nach sich ziehen können. In seltenen Fällen kann es auch zu Unfällen mit teilweise schwerwiegenden Folgen kommen, insbesondere wenn das Küchenutensil auf einem Gefäss oder Behälter aufgelegt und/oder abgestützt wird, in welchem sich heisser Inhalt befindet. Küchenutensilien, insbesondere der oben genannten Art umfassen, in der Regel einen Griff und ein Funktionsteil, an welchem der Griff vorgesehen und/oder angebracht ist. Dabei ist das Funktionsteil in der Regel grösser, schwererer und/oder massiger als der Griff. In der Regel wird das Funktionsteil bei einer bestimmungsgemässen Benutzung mit einer zumindest im Wesentlichen nach unten gerichteten und/oder zumindest im Wesentlichen parallel zur Schwerkraft gerichteten Kraft beaufschlagt.

Das deutsche Gebrauchsmuster DE 8814004 U1 beschreibt einen kombinierten Pfannen- und Kochtopfhalter, welcher verhindern soll, dass auf einem Herd abgestellte Pfannen oder Töpfe unbeabsichtigt herumgeschoben werden können.

Die WO 2019/090378 A1 beschreibt einen Kochgeschirr-Halter, der ein unbeabsichtigtes Bewegen von Kochgeschirr auf oder von einer Kochplatte herunter verhindern soll.

Das deutsche Gebrauchsmuster DE8814004U1 beschreibt einen kombinierten Pfannen- und Kochtopfhalter zur Zubereitung von Speisen auf einem Herd.

Der Erfindung liegt die Aufgabe zugrunde, ein Küchenhilfsmittel, anzugeben, welches einer einzelnen Person eine einfach, sichere und oder erschöpfungsfreie Durchführung von Küchenarbeiten und -handgriffe wie weiter oben ausgeführt ermöglicht, insbesondere im Umgang mit Küchenutensilien wie dort näher beschrieben.

### Kurze Beschreibung der Erfindung

Diese Aufgabe wird erfindungsgemäss durch ein Küchenhilfsmittel gemäss dem unabhängigen Patentanspruch gelöst.

Das Küchenhilfsmittel kann reversibel auf, an, neben oder über einer Küchenarbeitsfläche oder einem Kochfeld befestigt werden und in seinem Haltelement ein Küchenutensil aufnehmen und in gewünschter Position, insbesondere Höhe, und Neigung stabil und belastbar halten, wozu üblicherweise eine Hand erforderlich ist. Ein Benutzer des Küchenhilfsmittel hat somit eine (zusätzliche) Hand frei, wodurch viele Küchenarbeiten massiv erleichtert werden, insbesondere für Personen mit körperlichen Einschränkungen. Somit kann eine ohne das Küchenhilfsmittel unter Umständen notwendige Mithilfe durch eine zweite Person entfallen.

Vorteilhafte Ausgestaltungen der Erfindung sind Gegenstand der Unteransprüche, und/oder ergeben sich aus der nachfolgenden Beschreibung in Verbindung mit den Zeichnungen.

Im Folgenden wird anhand der beiliegenden Zeichnungen ein bevorzugtes Ausführungsbeispiel der Erfindung beschrieben.

Es zeigen
- Fig. 1: eine perspektivische Darstellung des erfindungsgemässen Küchenhilfsmittels aus einem ersten Blickwinkel;
- Fig. 2: eine perspektivische Darstellung des erfindungsgemässen Küchenhilfsmittels aus einem zweiten Blickwinkel;
- Fig. 3: eine perspektivische Darstellung des erfindungsgemässen Küchenhilfsmittels aus einem dritten Blickwinkel.

### Wege zur Ausführung der Erfindung

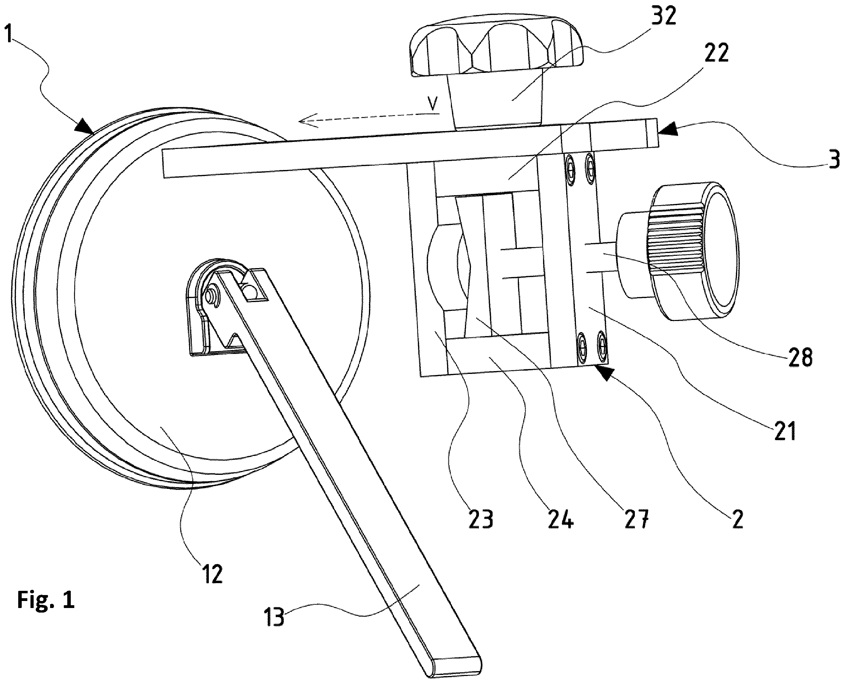

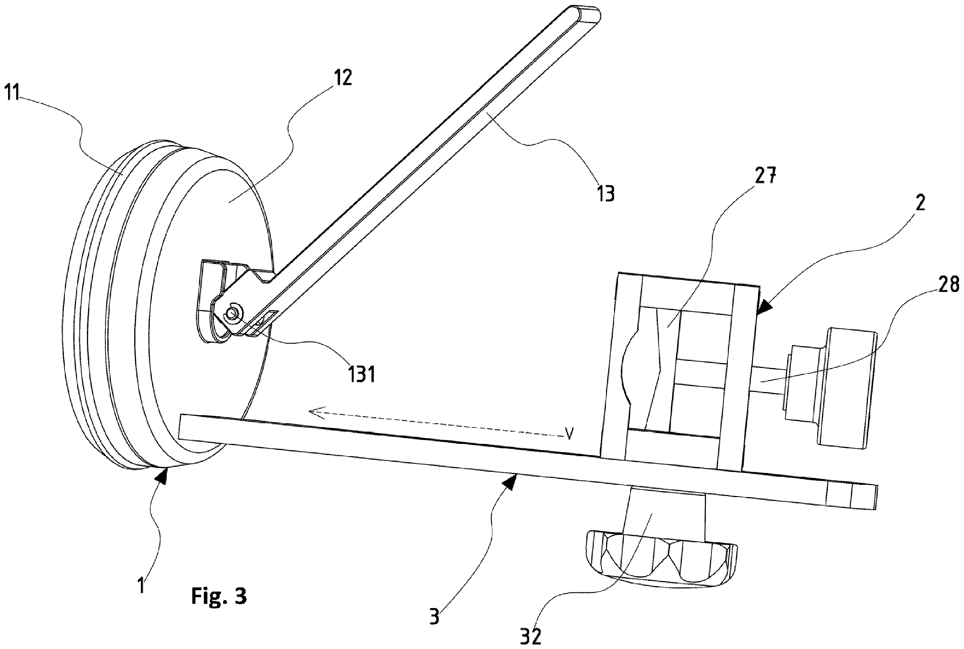

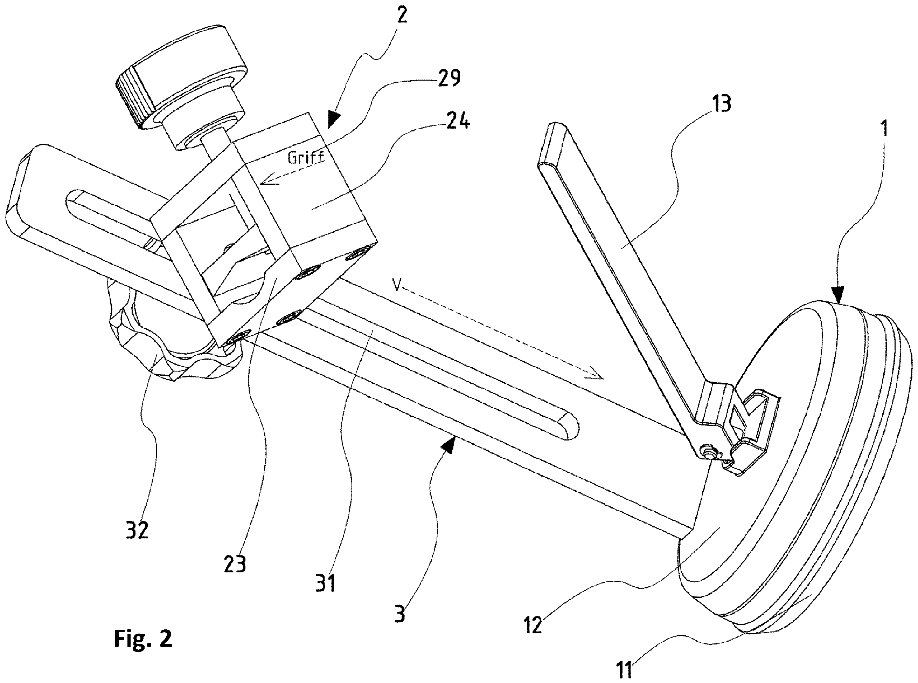

Die Figuren 1 bis 3 zeigen einen beispielhaften Aufbau eines erfindungsgemässen Küchenhilfsmittels in perspektivischer Darstellung aus verschiedenen Blickwinkeln.

Das Küchenhilfsmittel umfasst ein Befestigungselement 1 zum reversiblen Befestigen des Küchenhilfsmittels auf, an, neben oder über einer Küchenarbeitsfläche oder einem Kochfeld; ein Halteelement 2 zur Aufnahme eines Küchenutensils, sowie ein Positionierelement 3, mittels welchem das Halteelement in veränderbarem Abstand zum Befestigungselement 1 und/oder mit veränderbarem Neigungswinkel positionierbar ist.

Das Befestigungselement 1 ist als Hebelsaugnapf ausgeführt, welcher in einem unteren Bereich einen Saugnapf 11 aufweist, der auf eine zumindest annähernd ebene, vorzugsweise glatte, Fläche aufgesetzt werden kann, mit welcher das Küchenhilfsmittel vorübergehend fest verbunden werden soll. Oberhalb des Saugnapfes 11 ist als Stützelement für diesen eine Stützglocke 12 vorgesehen, welche eine konkave und/oder nach oben gewölbte Unterseite aufweisen kann. Mittels eines Hebelelements in Form eines Kniehebels 13, welcher kippbar an der Stützglocke montiert ist, kann der Saugnapf aktiviert werden, wobei ein zentraler Bereich des Saugnapfs 11 durch Schwenken des Kniehebels 13 in einer ersten Richtung, insbesondere zumindest annähernd in einer Vertikalrichtung V des Küchenhilfsmittels, von der Fläche weg und/oder gegen die Unterseite der Stützglocke 12 bewegt, insbesondere gezogen werden, während gleichzeitig ein - insbesondere ringförmiger - Rand des Saugnapfes 11 in Richtung der und/oder gegen die Fläche gepresst wird. Dadurch entsteht ein Unterdruck bzw. ein Vakuum in einem hermetisch abgeschlossenen Volumen, welches durch die Fläche und den Saugnapf begrenzt ist und/oder wird und eine Anpresskraft gegen die Fläche auf das Befestigungselement und somit das Küchenhilfsmittel bewirkt. Bei einem an einer Oberseite einer waagrechten Fläche, beispielsweise auf einer Arbeitsplatte oder einem Kochfeld, befestigten Küchenhilfsmittel weist die Vertikalrichtung V lotrecht nach unten. Das Küchenhilfsmittel kann aber auch an einer vertikalen Rückwand hinter dem Kochfeld oder der Arbeitsplatte befestigt werden. Schliesslich kann das Küchenhilfsmittel beispielsweise an einer Unterseite eines über dem Kochfeld oder der Arbeitsplatte angebrachten Hängeschranks, Dunstabzugs oder ähnlichem befestigt werden, in welchem Fall die Vertikalrichtung V des Küchenhilfsmittels senkrecht nach oben weist.

Der Saugnapf 11, insbesondere der Rand des Saugnapfes 11, kann einen Durchmesser von mehr als 10 cm, vorzugsweise mehr als 12cm aufweisen. Der Hebelsaugnapf kann vorzugsweise eine Anpresskraft von mehr als 200N, vorzugsweise mehr als 300N, höchst vorzugsweise mehr als 500N oder gar mehr als 1000N bereitstellen. Durch Zurückschwenken des Kniehebels 13 entgegen der ersten Richtung kann das Küchenhilfsmittel einfach und schnell von der Fläche gelöst werden.

Das Positionierelement 3 ist als vorzugsweise langgestreckte und/oder in Vertikalrichtung V ausgedehnte Schiene ausgeführt, die derart am Befestigungselement 1 angebracht ist, dass sie sich bei an der Fläche befestigtem Befestigungselement 1 zumindest annähernd senkrecht von der Fläche weg erstreckt. An der Schiene ist ein Langloch 31 gebildet, welches sich bei an der Fläche befestigtem Befestigungselement vorzugsweise ebenfalls zumindest annähernd senkrecht von der Fläche weg erstreckt. Eine Länge des Positionierelements kann zwischen 20cm und 40 cm betragen, vorzugsweise zumindest annähernd 28cm; eine Breite vorzugsweise zumindest annähernd 4,0cm. Eine Länge des Langlochs 31 kann vorzugsweise mehr als 10cm, mehr als 15cm oder höchst vorzugsweise mehr als 20cm betragen, insbesondere zumindest annähernd 24cm betragen, eine Breite vorzugsweise zumindest annähernd 8,0mm. Ein derart lang ausgeführtes Langloch 31 erlaubt es, das Küchenutensil quasi schwebend zu halten, insbesondere ohne dass ein Teil des Küchenutensils auf einer Herdplatte oder eine sonstigen Unterlage aufliegt.

Das Halteelement 2 umfasst eine erste Seitenwand 21, eine an die erste Seitenwand 21 angrenzende zweite Seitenwand 22, eine der ersten Seitenwand 21 gegenüberliegende und an die zweite Seitenwand 22 angrenzende dritte Seitenwand 23 und eine der zweiten Seitenwand 22 gegenüberliegende und an die erste und dritte Seitenwand angrenzende vierte Seitenwand 24. Die Seitenwände bilden und/oder definieren einen hohlen, auf bzw. nach einer ersten und einer, der ersten Seite gegenüberliegenden, zweiten Seite offenen bzw. geöffneten Quader. Zwischen der zweiten Seitenwand 22 und der vierten Seitenwand 24 erstreckt sich ein Klemmblock 27, welcher mittels einer Stellschraube 28 zwischen der ersten Seitenwand 21 und der dritten Seitenwand 23 und/oder in Richtung auf die dritte Seitenwand 23 bzw. von dieser weg verstellbar positioniert werden kann. Dazu ist in der ersten Seitenwand eine erste Gewindebohrung vorgesehen, durch welche die Stellschraube 28 hindurchgeschraubt ist. Durch Drehen an der Stellschraube 28 kann ein Küchenutensil, insbesondere in Griff eines Küchenutensils, zwischen dem Klemmblock 27 und der dritten Seitenwand 23 eingeklemmt, insbesondere kraftschlüssig mit der dritten Seitenwand 23 und/oder dem Klemmblock 27 verbunden werden. An einer Innenseite der dritten Seitenwand 23 und/oder einer der dritten Seitenwand 23 zugewandten Seite des Klemmblocks 27 können Vertiefungen oder Ausnehmungen vorgesehen sein, um eine Kontaktfläche mit verbreiteten Küchenutensilien, insbesondere mit Griffen derartiger Küchenutensilien, zu vergrössern und somit eine Klemmwirkung zu verbessern und/oder ein Verkippen zu verhindern. Die Seitenwände sind miteinander verschraubt, sie können jedoch auch auf andere Weise miteinander verbunden sein, insbesondere verschweisst oder verlötet. Der durch die vier Seitenwände gebildete Quader kann alternativ auch einstückig ausgeführt sein, und beispielsweise gegossen oder mittels Fräsen aus einem massiven Block gefertigt sein. Der Klemmblock 27 kann aus Kunststoff, insbesondere aus einem duroplastischen Kunststoff gefertigt sein. An einer Innenseite der zweiten und/oder vierten Seitenwand können Führungsmittel für den Klemmblock 27 vorgesehen sein, um unter anderem ein Verkanten, Verkippen und/oder eine ungleichmässige Belastung desselben beim Positionieren, insbesondere bei eingesetztem Küchenutensil, zu verhindern oder zumindest zu verringern. Klemmblock 27 und dritte Seitenwand 23 bilden somit ein erstes bzw. zweites Klemmelement, welche mittels der Stellschraube 28 relativ zueinander in einer Längsrichtung verstellbar sind, welche parallel zu einer Längsachse der Stellschraube 28 verläuft.

An der zweiten Seitenwand 22 ist eine (in den Figuren 1 bis 3 nicht sichtbare) mit dieser fest verbundene Gewindestange vorgesehen, welche durch das Langloch 31 geführt ist. Mittels einer Schraubenmutter, insbesondere einem mit einem Innengewinde versehenen Schraubgriff 32, kann das Halteelement 2 am Positionierelement 3 an gewünschter Position und mit einem gewünschten Neigungswinkel, insbesondere um eine Längsachse der Gewindestange, fixiert werden, insbesondere unter kraftschlüssiger Verbindung mit dem Positionierelement 3. Durch zumindest teilweises Lösen der Schraubenmutter können Position und/oder Neigungswinkel des Halteelements 2 geändert und anschliessend durch Anziehen der Befestigungsschraube wieder fixiert werden. Der Neigungswinkel kann dabei durch Drehen des Haltelelements um eine Rotationsachse verändert werden, welche Rotationsachse insbesondere parallel zu einer Längsachse der Gewindestange verläuft. Die Schraubenmutter kann auch vollständig vom Halteelement 2 gelöst werden, um dieses an einer gegenüberliegenden Seite des Positionierelements 3 in analoger Weise wie oben beschrieben mittels der Schraubenmutter zu befestigen. Gewindestange und Schraubenmutter können ein Gewinde der Dimension M8 aufweisen.

Alternativ kann die zweite Seitenwand 22 eine zweite Gewindebohrung aufweisen, welche ein Gewinde umfasst, das insbesondere in einem auf einer Aussenseite der zweiten Seitenwand gebildeten Sackloch vorgesehen sein kann. Mittels einer durch das Langloch 31 geführten und dem Gewinde verschraubten Befestigungsschraube kann das Halteelement 2 am Positionierelement 3 an gewünschter Position und mit einem gewünschten Neigungswinkel, insbesondere um eine Längsachse der Befestigungsschraube, fixiert werden, insbesondere unter kraftschlüssiger Verbindung mit dem Positionierelement 3. Durch zumindest teilweises Lösen der Befestigungsschraube kann Position und/oder Neigungswinkel des Halteelements 2 geändert und anschliessend durch Anziehen der Befestigungsschraube wieder fixiert werden. Die Befestigungsschraube kann auch vollständig vom Halteelement 2 gelöst werden, um dieses an einer gegenüberliegenden Seite des Positionierelements 3 in analoger Weise wie oben beschrieben zu befestigen.

Eine Dicke der Seitenwände kann vorzugsweise zumindest annähernd 10mm betragen. Ein Abstand zwischen erster Seitenwand 21 und zweiter Seitenwand 22 kann vorzugsweise zumindest annähernd 30mm betragen. Ein Abstand zwischen dritter Seitenwand 23 und vierter Seitenwand 24 kann vorzugsweise zumindest annähernd 40mm betragen. Abmessungen des Klemmblocks 27 in Richtungen senkrecht zu der Längsachse der Stellschraube 28 können zumindest annähernd 40mm betragen. Die Stellschraube kann ein Gewinde der Dimension M8 aufweisen.

Die Längsrichtung kann senkrecht zur Rotationsachse verlaufen. Dadurch kann verhindert werden, dass sich das Küchenutensil unter Kraftbeaufschlagung bei bestimmungsgemässer Benutzung in einer Richtung parallel zur Rotationsachse dreht.

Am Halteelement 2 kann eine Markierung 29 vorgesehen sein, die anzeigt, von welcher Seite her ein Griff des Küchenutensils vorzugsweise in das Haltelement eingeführt werden soll. Die Markierung 29 kann derart angebracht sein, dass bei entsprechend eingesetztem Küchenutensil durch ein im Vergleich zum Griff schwereres Funktionsteil ein Drehmoment in einer Feststellrichtung auf das Halteelement resultiert, welches insbesondere bewirken kann, dass die Schraubenmutter oder die Befestigungsschraube angezogen wird. Dadurch kann insbesondere auch verhindert werden, dass sich die Schraubenmutter oder die Befestigungsschraube lockert oder löst, und/oder sich der Neigungswinkel verstellt, wenn das Funktionsteil bei bestimmungsgemässer Benutzung mit einer zumindest im Wesentlichen nach unten gerichteten und/oder zumindest im Wesentlichen parallel zur Schwerkraft gerichteten Kraft beaufschlagt wird.

Die Stützglocke 12, der Kniehebel 13, das Positionierelement 3 und die Seitenwände des Halteelements 2 sind aus Aluminium gefertigt. Es kann jedoch, insbesondere für einzelne Bestandteile oder Elemente, ein anderes Material, insbesondere Metall gewählt werden. Insbesondere für die Stützglocke 12 kann vorzugsweise ein nicht ferromagnetisches, vorzugsweise nicht ferromagnetisches metallisches, Material gewählt werden, um zu verhindern, dass diese induktiv erhitzt wird, wenn das Küchenhilfsmittel versehentlich auf einem eingeschalteten Induktionskochfeld angebracht wird oder ist. Insbesondere für die Stützglocke 12 kann ferner vorzugsweise ein Material mit einer möglichst hohen Wärmeleitfähigkeit, insbesondere einer Wärmeleitfähigkeit von mehr als 225 W/(K·m), vorzugsweise mehr als 350 W/(K·m) gewählt werden, um bei einer (versehentlichen) Verwendung auf einem warmen oder gar heissen Kochfeld die Wärme besonders gut vom Saugnapf 11 ableiten zu können.

Der Saugnapf 11 ist vorzugsweise aus einem oder mehreren Elastomeren gebildet, welche insbesondere Silikon, Gummi oder Kautschuk enthalten können. Der Saugnapf 11 und/oder insbesondere ein Rand des Saugnapfes 11, welcher mit der Fläche in Berührung kommt, kann vorzugsweise aus einem hitzebeständigen Elastomer mit einer Hitzebeständigkeit bis mindestens 150°C, vorzugsweise bis mindestens 200°C, insbesondere aus einem Silikonelastomer.

Der Saugnapf 11 kann abnehmbar ausgebildet sein, wozu insbesondere eine Verbindung zwischen Saugnapf 11 und Kniehebel 13 leicht lösbar gestaltet sein kann, insbesondere eine Schraube oder einen senkrecht zur Vertikalrichtung V verlaufenden, herausnehmbaren Stift 131 umfassen kann. Dadurch wird einerseits eine Reinigung des Küchenhilfsmittel erleichtert, andererseits kann das Küchenhilfsmittel durch Austausch des Saugnapf 11 einfach und schnell repariert werden, falls dieser durch Hitze Schaden nimmt oder durch Alterung spröde und/oder und/oder undicht wird.

Das Küchenhilfsmittel kann eine Warneinrichtung umfassen, welche insbesondere am oder im Befestigungselement vorgesehen und dazu ausgelegt sein kann, bei Überschreiten einer vorgegebenen Maximaltemperatur einen Alarm, insbesondere ein akustisches Alarmsignal zu generieren. Die Alarmeinrichtung kann einen elektrischen Schaltkreis mit einer elektrischen Energiequelle, insbesondere einer Strom- oder Spannungsquelle, z.B. einer Batterie, ein wärmesensitives Element, insbesondere einen Temperatursensor, und/oder einen akustischen Signalgeber umfassen. Das wärmesensitive Element kann insbesondere mit dem Saugnapf 11 oder der Stützglocke 12 thermisch verbunden sein, insbesondere über eine Wärmeleitbrücke. Die vorgegebenen Maximaltemperatur kann beispielsweise zumindest annähernd 60°C, 80°C, 120°C, 150°C oder 180°C betragen. Als Energiequelle kann vorteilhaft ein thermoelektrischer Generator vorgesehen sein, der eine Vielzahl elektrisch in Reihe und/oder parallel geschalteter Thermoelemente umfassen kann. Der thermoelektrische Generator kann vorzugsweise thermisch mit dem Befestigungselement 1 gekoppelt sein, um bei einem (versehentlichen) Erhitzen des Befestigungselements 1 Wärme in elektrische Energie umwandeln zu können.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht notwendigerweise als die Erfindung einschränkend. Um das Verständnis der Erfindung nicht unnötig zu erschweren, können in gewissen Fällen wohlbekannte Merkmale, Strukturen und/oder Techniken nicht im Detail gezeigt oder beschrieben sein. Es versteht sich, dass Fachleute Änderungen und Abwandlungen machen können, ohne den Umfang der folgenden Ansprüche zu verlassen. Insbesondere deckt die vorliegende Erfindung weitere Ausführungsbeispiele mit irgendwelchen Kombinationen von Merkmalen ab, die von den explizit beschriebenen Merkmalskombinationen abweichen können.

Die vorliegende Offenbarung umfasst auch Ausführungsformen mit jeglicher Kombination von Merkmalen, die vorstehend oder nachfolgend zu verschiedenen Ausführungsformen genannt oder gezeigt sind. Sie umfasst ebenfalls einzelne Merkmale in den Figuren, auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand beziehungsweise von den offenbarten Gegenständen ausgeschlossen sein. Die Offenbarung umfasst Ausführungsformen, die ausschliesslich die in den Ansprüchen beziehungsweise in den Ausführungsbeispielen beschriebenen Merkmale umfasst sowie auch solche, die zusätzliche andere Merkmale umfassen.

Im Weiteren schliesst der Ausdruck "umfassen" und oder Ableitungen davon andere Elemente oder Schritte nicht aus. Ebenfalls schliesst der unbestimmte Artikel "ein" bzw. "eine" und Ableitungen davon eine Vielzahl nicht aus. Die Funktionen mehrerer in den Ansprüchen aufgeführter Merkmale können durch eine Einheit beziehungsweise einen Schritt erfüllt sein. Die Begriffe "im Wesentlichen", "etwa", "annähernd", "ungefähr" und dergleichen in Verbindung mit einer Eigenschaft beziehungsweise einem Wert definieren insbesondere auch genau die Eigenschaft beziehungsweise genau den Wert. Die Begriffe "etwa", "näherungsweise", "annähernd", "ungefähr" usw. im Zusammenhang mit einem gegebenen Zahlenwert oder -bereich können sich auf einen Wert beziehungsweise Bereich beziehen, der innerhalb 20%, innerhalb 10%, innerhalb 5% oder innerhalb 2% des gegebenen Werts beziehungsweise Bereichs liegt. Alle Bezugszeichen in den Ansprüchen sind nicht als den Umfang der Ansprüche einschränkend zu verstehen. Eine Angabe, wonach a ≈ b gilt, kann dahingehend zu verstehen sein, dass |*a*-*b*|/(|*a*|+|*b*|) < 0,2, vorzugsweise |*a*-*b*|/(|*a*|+|*b*|) < 0,05, höchst vorzugsweise |*a*-*b*|/(|*a*|+|*b*|) < 0,01 gilt, wobei a und b beliebige, an irgendeiner Stelle in diesem Dokument definierte und/oder beschriebene oder anderweitig dem Fachmann bekannte Variablen oder Grössen repräsentieren kann.

Dass ein Merkmal oder eine Eigenschaft, beispielsweise eine spezifische, insbesondere geometrische, Form, zumindest näherungsweise ausgebildet, vorgesehen oder vorhanden ist, kann insbesondere bedeuten, dass Fertigungsvorgaben existieren, welche eine Vorgabe vorsehen, gemäss welcher das Merkmal entsprechend ausgebildet wird, wobei im Rahmen üblicher, dem Fachmann bekannter Fertigungstoleranzen eine Abweichung von der Vorgabe resultieren kann.

In der Beschreibung in Klammern gesetzte Merkmale, Eigenschaften, etc. können vorhanden und/oder erforderlich sein, müssen dies aber nicht, und sind grundsätzlich als optional zu betrachten. Solche Merkmale können dem besseren Verständnis der Erfindung durch Ausblenden von impliziten, aber erfindungsunwesentlichen Aspekten dienen. Derartige Merkmale, Eigenschaften, etc. können vorteilhaft sein.

Dass ein Element oder Merkmal in einer Richtung ausgedehnt ist oder sich in einer Richtung erstreckt kann insbesondere bedeuten, dass Abmessungen des Elements oder Merkmals in dieser Richtung grösser sind als in anderen, insbesondere allen anderen Richtungen, insbesondere orthogonalen Richtungen.

Die Begriffe "oben", "unten", "Oberseite", "Unterseite" können dahingehend zu verstehen sein, dass eine in den Figuren gezeigte Vertikalrichtung V des Küchenhilfsmittels von oben nach unten verläuft.

## Patentansprüche

1. Küchenhilfsmittel, umfassend
a. ein Befestigungselement (1) zum Befestigen, insbesondere reversiblen Befestigen, des Küchenhilfsmittels auf, an, neben oder über einer Küchenarbeitsfläche oder einem Kochfeld;
b. ein Halteelement (2) zur Aufnahme, insbesondere zum Festklemmen, eines Küchenutensils;
c. ein Positionierelement (3), mittels welchem das Halteelement in
i. veränderbarem Abstand zum Befestigungselement mit
ii. veränderbarem Neigungswinkel
positionierbar ist; **dadurch gekennzeichnet, dass**
d. das Halteelement (2) als auf zwei gegenüberliegenden Seiten offener Quader ausgeführt ist.

2. Küchenhilfsmittel nach Anspruch 1, wobei das Befestigungselement einen Saugnapf (11), insbesondere einen Hebelsaugnapf, umfasst.

3. Küchenhilfsmittel nach Anspruch 1 oder 2, wobei das Befestigungselement einen Hebelsaugnapf mit einem Saugnapf (11), einem Stützelement (12) und einem Hebelelement (13) zum Aktivieren des Saugnapfes umfasst.

4. Küchenhilfsmittel nach Anspruch 3, **dadurch gekennzeichnet, dass** der Saugnapf (11) lösbar mit dem Hebelelement (13) verbunden ist.

5. Küchenhilfsmittel nach einem der Ansprüche 3 bis 4, **dadurch gekennzeichnet, dass**
der Saugnapf (11) aus einem Silikonelastomer gebildet ist.

6. Küchenhilfsmittel nach einem der Ansprüche 3 bis 5, **dadurch gekennzeichnet, dass**
das Stützelement (12) aus Kupfer gebildet ist.

7. Küchenhilfsmittel nach einem der vorangehenden Ansprüche, wobei das Küchenhilfsmittel eine, insbesondere am oder im Befestigungselement (1) vorgesehene, Warneinrichtung umfasst, welche und dazu ausgelegt ist, bei Überschreiten einer vorgegebenen Maximaltemperatur einen Alarm, insbesondere ein akustisches Alarmsignal, zu generieren.

8. Küchenhilfsmittel nach dem vorangehenden Ansprüche, wobei die Warneinrichtung ein Thermoelement als elektrische Energiequelle umfasst.

9. Küchenhilfsmittel nach einem der vorangehenden Ansprüche, wobei das Positionierelement (3) als langgestreckte Schiene ausgeführt ist, die derart am Befestigungselement (1) angebracht ist, dass sie sich bei an einer Fläche befestigtem Befestigungselement senkrecht zu der Fläche erstreckt, und wobei das Positionierelement vorzugsweise ein Langloch (31) umfasst.

10. Küchenhilfsmittel nach einem der vorangehenden Ansprüche, wobei am Halteelement (2) eine Gewindestange vorgesehen ist, mittels welcher das Halteelement am Positionierelement befestigt ist, wobei die Gewindestange vorzugsweise durch das Langloch (31) geführt ist und mit einer Schraubenmutter (32) versehen ist.

11. Küchenhilfsmittel nach einem der vorangehenden Ansprüche, wobei das Halteelement ein mittels einer Stellschraube verstellbares und/oder positionierbares Klemmelement, insbesondere erstes Klemmelement (27), aufweist, mittels welchem das Küchenutensil zwischen Klemmelement und einer Seitenwand (23) des Halteelements (2) festgeklemmt werden kann.

12. Küchenhilfsmittel nach einem der vorangehenden Ansprüche, wobei
a. das Halteelement (2) ein erstes Klemmelement (27) und ein zweites Klemmelement (23) aufweist, welche relativ zueinander in einer Längsrichtung verstellbar sind;
b. der Neigungswinkel durch Drehen des Halteelements um eine Rotationsachse veränderbar ist; und
c. die Längsrichtung senkrecht zu der Rotationsachse verläuft.

13. Verwendung eines Küchenhilfsmittels nach einem der vorangehenden Ansprüche zum Halten eines Küchenutensils über einem Kochfeld oder einer Küchenarbeitsplatte.

## Claims

1. A kitchen aid, comprising
a. a fastening element (1) for fastening, in particular reversibly fastening, the kitchen aid on, on, next to or above a kitchen work surface or a hob;
b. a holding element (2) for receiving, in particular for clamping, a kitchen utensil;
c. a positioning element (3), by means of which the holding element can be positioned at
i. a variable distance to the fastening element with
ii. a variable angle of inclination;
**characterized in that**
d. the holding element (2) is designed as a cuboid open on two opposite sides.

2. The kitchen aid according to claim 1, wherein the fastening element comprises a suction cup (11), in particular a lever suction cup.

3. The kitchen aid according to claim 1 or 2, wherein the fastening element comprises a lever suction cup with a suction cup (11), a support element (12) and a lever element (13) for activating the suction cup.

4. The kitchen aid according to claim 3, **characterized in that** the suction cup (11) is detachably connected to the lever element (13).

5. The kitchen aid according to any one of claims 3 to 4, **characterized in that** the suction cup (11) is formed from a silicone elastomer.

6. The kitchen aid according to one of claims 3 to 5, **characterized in that** the support element (12) is formed of copper.

7. The kitchen aid according to one of the preceding claims, wherein the kitchen aid comprises a warning device, in particular provided on or in the fastening element (1), which is designed to generate an alarm, in particular an acoustic alarm signal, when a predefined maximum temperature is exceeded.

8. The kitchen aid according to the preceding claim, wherein the warning device comprises a thermocouple as electrical energy source.

9. The kitchen aid according to one of the preceding claims, wherein the positioning element (3) is designed as an elongated rail which is attached to the fastening element (1) in such a way that it extends perpendicularly to the surface when the fastening element is fastened to a surface, and wherein the positioning element preferably comprises an elongated hole (31).

10. The kitchen aid according to one of the preceding claims, wherein a threaded rod is provided on the retaining element (2), by means of which the retaining element is fastened to the positioning element, wherein the threaded rod is preferably guided through the elongated hole (31) and is provided with a screw nut (32).

11. The kitchen aid according to one of the preceding claims, wherein the holding element has a clamping element, in particular a first clamping element (27), which can be adjusted and/or positioned by means of an adjusting screw and by means of which the kitchen utensil can be clamped tightly between the clamping element and a side wall (23) of the holding element (2).

12. The kitchen aid according to one of the preceding claims, wherein
a. the holding element (2) comprises a first clamping element (27) and a second clamping element (23), which are adjustable relative to each other in a longitudinal direction;
b. the angle of inclination is variable by rotation of the holding element about an axis of rotation; and
c. the longitudinal direction is perpendicular to the axis of rotation.

13. Use of a kitchen aid according to any one of the preceding claims for holding a kitchen utensil above a hob or a kitchen worktop.

## Revendications

1. Équipement de cuisine, comprenant
a. un élément de fixation (1) pour fixer, en particulier de manière réversible, l'équipement de cuisine sur, contre, à côté ou au-dessus d'un plan de travail de cuisine ou d'une plaque de caisson ;
b. un élément de maintien (2) destiné à recevoir, en particulier à serrer, un ustensile de cuisine ;
c. un élément de positionnement (3) au moyen duquel l'élément de fixation peut être positionné à
i. une distance variable par rapport à l'élément de fixation avec
ii. un angle d'inclinaison variable ;
**caractérisé en ce que**
d. l'élément de maintien (2) est réalisé sous forme de parallélépipède ouvert sur deux côtés opposés.

2. Équipement de cuisine selon la revendication 1, dans lequel l'élément de fixation comprend une ventouse (11), en particulier une ventouse à levier.

3. Équipement de cuisine selon la revendication 1 ou 2, dans lequel l'élément de fixation comprend une ventouse à levier comprenant une ventouse (11), un élément de support (12) et un élément de levier (13) pour activer la ventouse.

4. Équipement de cuisine selon la revendication 3, **caractérisé en ce que** la ventouse (11) est reliée de manière amovible à l'élément de levier (13).

5. Équipement de cuisine selon l'une des revendications 3 à 4, **caractérisé en ce que** la ventouse (11) est formée d'un élastomère de silicone.

6. Équipement de cuisine selon l'une des revendications 3 à 5, **caractérisé en ce que** l'élément de support (12) est formé de cuivre.

7. Équipement de cuisine selon l'une quelconque des revendications précédentes, dans lequel l'équipement de cuisine comprend un dispositif d'alerte, notamment prévu sur ou dans l'élément de fixation (1), adapté pour générer une alarme, notamment un signal d'alarme sonore, en cas de dépassement d'une température maximale prédéterminée.

8. Équipement de cuisine selon les revendications précédentes, dans lequel le dispositif d'alerte comprend un thermocouple comme source d'énergie électrique.

9. Équipement de cuisine selon l'une quelconque des revendications précédentes, dans lequel l'élément de positionnement (3) est réalisé sous la forme d'un rail allongé qui est monté sur l'élément de fixation (1) de telle sorte qu'il s'étend perpendiculairement à la surface lorsque l'élément de fixation est fixé à une surface, et dans lequel l'élément de positionnement comprend de préférence un trou oblong (31).

10. Équipement de cuisine selon l'une des revendications précédentes, dans lequel une tige filetée est prévue sur l'élément de fixation (2), au moyen de laquelle l'élément de fixation est fixé à l'élément de positionnement, la tige filetée étant de préférence guidée à travers le trou oblong (31) et étant pourvue d'un écrou (32).

11. Équipement de cuisine selon l'une des revendications précédentes, dans lequel l'élément de maintien présente un élément de serrage réglable et/ou positionnable au moyen d'une vis de réglage, en particulier un premier élément de serrage (27), au moyen duquel l'ustensile de cuisine peut être serré entre l'élément de serrage et une paroi latérale (23) de l'élément de maintien (2).

12. Équipement de cuisine selon l'une des revendications précédentes, dans lequel
a. l'élément de maintien (2) présente un premier élément de serrage (27) et un deuxième élément de serrage (23) qui peuvent être déplacés l'un par rapport à l'autre dans une direction longitudinale ;
b. l'angle d'inclinaison peut être modifié en faisant tourner l'élément de retenue autour d'un axe de rotation ; et
c. la direction longitudinale est perpendiculaire à l'axe de rotation.

13. Utilisation d'un équipement de cuisine selon l'une quelconque des revendications précédentes pour maintenir un ustensile de cuisine au-dessus d'une plaque de cuisson ou d'un plan de travail de cuisine.
